# EUROPÄISCHE PATENTANMELDUNG

(11) **EP 1 964 706 A1**
(43) Veröffentlichungstag der Anmeldung: **03.09.2008**
(21) Anmeldenummer: 07024832.3
(22) Anmeldetag: 20.12.2007
(51) Int. Cl.: B60K 13/02, F02M 35/10, F16L 11/10, F16L 11/115

(54) **Ladeluftschlauch**

(30) Priorität: 28.02.2007 DE 102007009906
(71) Anmelder: VERITAS AG, 63571 Gelnhausen (DE)
(72) Erfinder: van Hooren, Marc, Dr., 63579 Freigericht-Bernbach (DE); Daumas, Alexandre, 63589 Linsengericht (DE); Hummel, Gerhard, 63633 Birstein (DE)
(74) Vertreter: Grünecker, Kinkeldey, Stockmair & Schwanhäusser Anwaltssozietät

(57) **Zusammenfassung**

Die Erfindung betrifft einen Ladeluftschlauch (1) für Kraftfahrzeuge, umfassend: einen schlauchförmigen Grundkörper (2) und einen textilen Druckträger (3). Bei einem herkömmlichen Ladeluftschlauch ist der textile Druckträger in den Grundkörper eingebettet oder zwischen zwei Schichten des Grundkörpers angeordnet. Eine anhaltende dynamische Beanspruchung des herkömmlichen Ladeluftschlauchs führt zur Delamination des Verbundes. Um die aus dem Stand der Technik bekannten Probleme zu lösen, stellt die Erfindung einen Ladeluftschlauch (1) für Kraftfahrzeuge bereit, umfassend: einen schlauchförmigen Grundkörper (2), einen textilen Druckträger (3), der an der Oberfläche des Grundkörpers im Wesentliches freischwimmend angeordnet ist, wobei der schlauchförmige Grundkörper (2) ein vulkanisierter, elastomerhaltiger Schlauch ist.

## Beschreibung

Die Erfindung betrifft einen Ladeluftschlauch für Kraftfahrzeuge, umfassend: einen schlauchförmigen Grundkörper und einen textilen Druckträger.

Aus dem Stand der Technik sind Ladeluftschläuche mit textilen Druckträgern bekannt, wobei der textile Druckträger in eine Elastomermatrix bzw. zwischen zwei Elastomerschichten eingebettet ist.

Unter dynamischer Beanspruchung unterliegen die herkömmlichen, textilverstärkten Ladeluftschläuche einer hohen mechanischen Arbeit. Beide Komponenten, der Druckträger und die den Druckträger einbettende Matrix, weisen unterschiedliche Kraft-Dehnungsverhalten auf. Ist der Druckträger zwischen zwei Schichten positioniert, entstehen unter Belastung des Schlauchs Scherkräfte an den Verbindungsstellen Matrix/Druckträger, die zur Delamination des Verbundes und somit zu seinem Ausfall führen. Zusätzlich kommt es bei dynamischmechanischer Beanspruchung (durch die Expansion des Schlauches verursachte Dehnungen und überlagerte mechanische Zwangsbewegungen) aufgrund der Kerbwirkung des Druckträgers (hoher E-Modul im Vergleich zum Elastomer) zu Mikrorissen in der angrenzenden Elastomermatrix, die weiterhin als Ausgangspunkt eines Risswachstums anzusehen sind.

Der Erfindung liegt die Aufgabe zugrunde, die aus dem Stand der Technik bekannten Probleme zu lösen, und insbesondere einen Ladeluftschlauch bereitzustellen, der unter dynamischer Beanspruchung eine gegenüber dem herkömmlichen Schlauch erheblich verlängerte Lebensdauer aufweist.

Um diese der Erfindung zugrunde liegende Aufgabe zu lösen, stellt die Erfindung den Ladeluftschlauch für Kraftfahrzeuge nach Anspruch 1 bereit, umfassend: einen schlauchförmigen Grundkörper, einen textilen Druckträger, der an der Oberfläche des Grundkörpers angeordnet ist, wobei der schlauchartige Grundkörper ein vulkanisierter, elastomerhaltiger Schlauch ist. Da der Druckträger an der Schlauchoberfläche angeordnet ist, weist der erfindungsgemäße Ladeluftschlauch nur noch eine einzige Verbindungsstelle zwischen dem Grundkörper und dem Druckträger auf. In einem herkömmlichen Herstellungsprozess wird der Druckträger auf einen Elastomer in unvulkanisiertem Zustand aufgebracht und mit mindestens einer Elastomerschicht bedeckt. Das Elastomer ist aufgrund des unvulkanisierten Zustands weich. Bedingt durch den weichen Zustand des Elastomers und durch die Garnspannung bei der Herstellung des textilen Druckträgers sowie anderen Prozessumständen dringt der Druckträger in die elastomere Oberfläche ein. Die Kontaktfläche zwischen dem Elastomer und dem Druckträger ist somit dreidimensional. Das Elastomer ummantelt die Garne des Druckträgers. Bei einer solchen Kontaktfläche und bei dynamischer Belastung des Schlauchs ist die Kraftübertragung zwischen dem Elastomer und dem textilen Druckträger sowohl kraftschlüssig (axial zum Garn) als auch formschlüssig (radial zum Garn). Die Formschlussverbindung weist eine sehr niedrige Tragfähigkeit auf und stellt somit schon bei niedriger Belastung des Schlauchs eine Schwachstelle dar, bei der sich der Druckträger vom Elastomer löst. Die so genannte Delamination ist umso mehr ausgeprägt, als die Garne in das Elastomer nicht vollständig eingebettet sind sondern nur ummantelt sind. Beim erfindungsgemäßen Ladeluftschlauch ist der textile Druckträger auf einen schon vulkanisierten, elastomerhaltigen Schlauch aufgebracht. Vorzugsweise ist der elastomerhaltige Schlauch vor dem Aufbringen des textilen Druckträgers vulkanisiert worden. Dies verringert die Reibung des textilen Druckträgers gegenüber dem elastomerhaltigen Schlauch bei dynamischer Beanspruchung. Der elastomerhaltige Schlauch ist im vulkanisierten Zustand hart und der Druckträger kann somit nicht in das elastomerhaltige Material eindringen. Die Kontaktfläche zwischen dem Druckträger und dem elastomerhaltigen Material ist die zweidimensionale Oberfläche des elastomerhaltigen Schlauchs. Die Kraftübertragung von der Schlauchoberfläche auf den Druckträger ist überwiegend formschlüssig (rechtwinklig zur Schlauchoberfläche) und somit im Idealfall ohne Reibung. Der erfindungsgemäße Ladeluftschlauch ist im Vergleich zu dem herkömmlichen Ladeluftschlauch sehr geeignet gegen dynamische Ermüdung.

In einer weiteren bevorzugten Ausführung der Erfindung ist über dem textilen Druckträger zumindest ein Druckring angeordnet. Dies hat den Vorteil, dass der Druckring den textilen Druckträger eng an der Kontur des Grundkörpers hält.

In einer weiteren bevorzugten Ausführung der Erfindung ist der schlauchförmige Grundkörper als Elastomerschlauch ausgebildet.

In einer weiteren bevorzugten Ausführung der Erfindung weist der elastomerhaltige Schlauch eine im Wesentlichen glatte Oberfläche auf. Diese Maßnahme verringert die Reibung zwischen dem Druckträger und dem Grundkörper, was die Lebensdauer des erfindungsgemäßen Ladelufischlauchs bei dynamischer Beanspruchung erhöht.

In einer weiteren bevorzugten Ausführung der Erfindung ist der elastomerhaltige Schlauch im Extrusionsverfahren oder Spritzgussverfahren hergestellt. Diese Fertigungstechniken erweisen sich im Zusammenhang mit elastomerhaltigen Schläuchen als besonders wirtschaftlich.

In einer weiteren bevorzugten Ausführung der Erfindung weist der elastomerhaltige Schlauch einen thermoplastischen Elastomer auf. Durch Beigabe eines thermoplastischen Elastomers lassen sich die dynamischen und mechanischen Eigenschaften des Schlauchs gezielt einstellen.

In einer weiteren bevorzugten Ausführung der Erfindung ist der textile Druckträger als Gestrick oder Geflecht ausgebildet. Dabei kann der Druckträger so ausgelegt werden, dass er formgerecht auf dem elastomerhaltigen Schlauch sitzt und dass seine Verformung den Bereich seiner Strukturdehnung nicht überschreitet. Der Druckträger befindet sich somit in einem niedrigeren Spannungszustand als bei dem herkömmlichen Ladeluftschlauch der Fall ist, der zudem über die gesamte Schlauchoberfläche gleichmäßig ist. Struktur- und Materialdehnung sind die zwei klassischen elastischen Dehnungszustände einer Textilstruktur. Im Bereich der Strukturdehnung wird eine Textilstruktur mit sehr niedrigen Kräften verformt. Der Grund liegt darin, dass die Garne in bestimmter, von der Textilstruktur (Gestrick, Geflecht) bedingter Weise aneinander gleiten können und die Textilstruktur somit andere Formen annehmen kann, ohne dass die Garne mechanisch belastet werden. Wird die Struktur weiter gedehnt, fängt der Bereich der Materialdehnung an. In dem letztgenannten Dehnungszustand wird die Garnstruktur belastet. Kleine Verformungen des Bauteils sind mit hohen Kräften verbunden. Diese Ausführung, bei der das Aufbringen des textilen Druckträgers auf den vulkanisierten, geformten, elastomerhaltigen Schlauch in der Form eines Gestricks oder Geflechts erfolgt, bringt die größte Freiheit bei der Konstruktion eines textilverstärkten, elastomerhaltigen Schlauchs mit sich. Jegliche existierende bzw. denkbare Textilstruktur kann eingesetzt werden, oder ebenfalls in einem definierten Spannungszustand aufgebracht werden. Dies eröffnet nicht nur den Einsatz von Ladeluftschläuchen für deutlich höhere Druckbereiche als die bisherigen im PKW-Bereich üblichen, sondern ermöglicht auch eine kontrollierte Volumenzunahme des Schlauchs im Betrieb, was zuletzt aufgrund des stets enger werdenden Bauraums im Motorraum einen bedeutenden Fortschritt darstellt. Eine solche Ausführung, bei welcher der textile Druckträger auf dem schon vulkanisierten, elastomerhaltigen Schlauch freischwimmend aufgebracht wird und auf dem er einen gleichmäßigen Spannungszustand aufweist, bringt ebenfalls einen bedeutenden Fortschritt mit sich. Die Textilstruktur ist enorm flexibel. Dies gilt insbesondere für die geflochtene Ausführung, da dort das dynamische bzw. mechanische Leistungsverhalten bei vorgegebener Kontur über den Geflechtswinkel bzw. Auszug definiert einstellbar ist. Die Feinheit bzw. Stärke des Garns ist gemäß dem jeweiligen Anforderungsprofil frei wählbar, da im Gegensatz zu einem innen liegenden Druckträger wie beim herkömmlichen Ladeluftschlauch keine Wechselwirkung (Kerbwirkung) zwischen dem Druckträger und der Matrix entsteht. Zusätzlich spielt auch bei herkömmlichen Ladeluftschläuchen die Haftung zwischen den Lagen eine wesentliche Rolle, insofern ist die Stärke des Garns limitiert. Je stärker das Garn, desto schlechter ist bereits die Lagenbindung im Originalzustand. Der Druckträger kann durch konturnahes Umflechten aufgebracht werden, was sich insbesondere bei Glattschläuchen eignet. Auch das Aufbringen eines vorgefertigten Geflechts oder Gestricks (z. B. vorgefertigter Geflechtschlauch) erweist sich als möglich, und eignet sich insbesondere bei Wellschläuchen.

In einer weiteren bevorzugten Ausführung der Erfindung ist der textile Druckträger aus Glasfilament hergestellt. Glasfilamente gehören zu den hochfesten Garnmaterialien, sind preiswert und zeichnen sich durch hohe thermische und gute chemische Beständigkeit sowie sehr niedrige Dehnbarkeit aus.

In einer weiteren bevorzugten Ausführung der Erfindung ist der textile Druckträger als 3D-Geflecht ausgebildet. Diese Fertigungstechnik des textilen Druckträgers ermöglicht eine besonders hohe Anpassung an die Form des Grundkörpers und damit eine besonders geringe Relativbewegung des textilen Druckträgers zum Grundkörper bei dynamischer Beanspruchung des erfindungsgemäßen Ladeluftschlauchs.

In einer weiteren bevorzugten Ausführung der Erfindung umgibt der textile Druckträger den Formschlauch formgerecht. Dadurch findet bei dynamischer Beanspruchung des erfindungsgemäßen Ladeluftschlauchs eine geringe Relativbewegung zwischen Grundkörper und Druckträger statt.

In einer besonders bevorzugten Ausführung der Erfindung ist der textile Druckträger mit einem Beschichtungsmaterial imprägniert und/oder beschichtet. Dies schützt den Druckträger vor Verschleiß, z. B. durch Reibung. Weiterhin werden das Garn bzw. der textile Druckträger schnittfest ausgerüstet und somit vor Ausfransen der einzelnen Filamente geschützt. Im Übrigen dient die Imprägnierung oder Beschichtung des Druckträgers der Fixierung auf der Schlauchoberfläche bzw. der Montagehaftung. Zudem werden die Garnfilamente im Hinblick auf die Anbindung (z. B. an ein Ladeluftrohr mittels Schlauchschelle, Kupplungen, etc.) besser geschützt. Bei dieser Ausführung ist die nachträgliche Imprägnierung bei konturnahen Oberflächen möglich, ebenso wie die direkte Beschichtung des textilen Druckträgers nach dem Flechtprozess bei vorgefertigten Geflechtschläuchen.

In einer weiteren bevorzugten Ausführung der Erfindung ist das Garn des textilen Druckträgers mit einer Imprägnierung versehen. Die Imprägnierung erfolgt vorzugsweise vor der Fertigung des textilen Druckträgers, d.h. vor dem Flechten oder Stricken. Auch diese Maßnahme dient dem Schutz des Garns und des textilen Druckträgers vor Verschleiß. Dieser Schutz ist besonders an den Garnkreuzungspunkten des textilen Druckträgers wichtig, die eine Schwachstelle hinsichtlich Garn/Garn-Reibung darstellen..

In einer weiteren bevorzugten Ausführung der Erfindung ist das Beschichtungsmaterial ein Harz oder ein Elastomer, vorzugsweise ein Silikonelastomer. Als Werkstoff eignet sich die flexible Harz- oder Elastomerbeschichtung z. B in Form von Lösungen oder Latizes. Bei Verwendung eines textilen Druckträgers aus Glasfilamenten wird als Beschichtungsmaterial vorzugsweise ein haftmodifizierter Silikonelastomer verwendet, wodurch eine universelle Temperaturbeständigkeit, hohe Flexibilität und gute Haftung zu den Glasfaserfilamenten erzielbar ist.

In einer bevorzugten Ausführung der Erfindung wird das Beschichtungsmaterial durch Tauchen, Lackieren oder Umspritzen des Ladeluftschlauchs, oder durch Extrusion bei Geflechtsschläuchen mit nachträglicher Vernetzung aufgetragen, da das elastomere Beschichtungsmaterial grundsätzlich nach dem Auftrag vulkanisiert werden muss, bevorzugt durch ein Online-Verfahren.

In einer weiteren bevorzugten Ausführung der Erfindung ist das Beschichtungsmaterial in einer gegenüber dem Grundkörper und/oder dem Druckträger unterschiedlichen Farbe eingefärbt. So ist eine Kennzeichnung des Ladeluftschlauchs durch die Beschichtung möglich.

In einer weiteren bevorzugten Ausführung der Erfindung ist der textile Druckträger an zumindest einem Schlauchende in ein mit dem Grundkörper stoffschlüssig verbundenes Material eingebettet. Vorzugsweise ist der Ladeluftschlauch dazu an dem Schlauchende umspritzt. Dies verhindert ein Ablösen oder Ausfransen des textilen Druckträgers und dient der Funktionalisierung der Schlauchenden im Hinblick auf die Anbindung und Integration von Funktionen, z. B. im Schellensitz, Schellenfixierung, Einbaumarkierungen, etc.

In einer weiteren bevorzugten Ausführung der Erfindung ist an zumindest einem Schlauchende eine Kappe, vorzugsweise Elastomerkappe, aufgeklebt und/oder aufvulkanisiert. Dabei eignen sich funktionalisierte elastomere Schlauchabschnitte zum Aufkleben oder Aufvulkanisieren auf die Schlauchenden.

Eine weitere bevorzugte Ausführungsform der Erfindung betrifft ein Verfahren zum Herstellen eines Ladeluftschlauches für Kraftfahrzeuge, umfassend die Schritte: Bereitstellen eines elastomerhaltigen Schlauchs als schlauchförmigen Grundkörper, Vulkanisieren des elastomerhaltigen Schlauchs und Aufbringen eines textilen Druckträgers auf die Oberfläche des vulkanisierten, elastomerhaltigen Schlauchs.

Eine weitere bevorzugte Ausführung des erfindungsgemäßen Verfahrens umfasst das Imprägnieren und/oder Beschichten des textilen Druckträgers mit einem Beschichtungsmaterial zur Verringerung des Verschleißes des textilen Druckträgers.

Eine weitere bevorzugte Ausführung des erfindungsgemäßen Verfahrens umfasst das Imprägnieren des Garns des textilen Druckträgers mit dem Ziel der Verringerung des Verschleißes des textilen Druckträgers durch Verringerung der Garn/Garn-Reibung an den Kreuzungspunkten des textilen Druckträgers.

Eine weitere bevorzugte Ausführung des erfindungsgemäßen Verfahrens umfasst das Umstricken, Umweben oder Umflechten des elastomerhaltigen Schlauchs zum Auftragen des textilen Druckträgers.

Bevorzugte Ausführungsbeispiele und Merkmale der Erfindung werden nachstehend mit Bezug auf die beiliegenden Zeichnungen beschrieben.

### Kurze Beschreibung der Zeichnungen

- Fig. 1: zeigt eine perspektivische Ansicht des erfindungsgemäßen Ladeluftschlauchs gemäß einem ersten Ausführungsbeispiel, mit einem elastomerhaltigen Schlauch als Grundkörper und einem textilen Druckträger an der Schlauchoberfläche.
- Fig. 2: zeigt einen Querschnittsausschnitt des erfindungsgemäßen Ladeluftschlauchs aus Fig. 1.
- Fig. 3: zeigt einen Querschnittsausschnitt des erfindungsgemäßen Ladeluftschlauchs aus Fig. 1, wobei der Garn des textilen Druckträgers imprägniert bzw. beschichtet ist.
- Fig. 4: zeigt eine perspektivische Ansicht des erfindungsgemäßen Ladeluftschlauchs gemäß einem zweiten Ausführungsbeispiel, mit einem elastomerhaltigen Schlauch als Grundkörper, einem textilen Druckträger an der Schlauchoberfläche und einer auf den textilen Druckträger aufgebrachten Imprägnierung bzw. Beschichtung.
- Fig. 5: zeigt einen Querschnittsausschnitt des erfindungsgemäßen Ladeluftschlauchs des zweiten Ausführungsbeispiels aus Fig. 4.
- Fig. 6: zeigt eine perspektivische Ansicht des erfindungsgemäßen Ladeluftschlauchs gemäß einem dritten Ausführungsbeispiel, mit einem elastomerhaltigen Schlauch als Grundkörper, einem textilen Druckträger an der Schlauchoberfläche, wobei der elastomerhaltige Schlauch als Wellschlauch ausgebildet ist, und wobei von mehreren Druckringen jeweils ein Druckring in einem Wellental zwischen zwei benachbarten Wellenbergen des Wellschlauchs über dem textilen Druckträger angeordnet ist.
- Fig. 7: zeigt eine perspektivische Ansicht des erfindungsgemäßen Ladeluftschlauchs gemäß einem vierten Ausführungsbeispiel, mit einem elastomerhaltigen Schlauch als Grundkörper, einem textilen Druckträger an der Schlauchoberfläche, wobei der elastomerhaltige Schlauch als Wellschlauch, ausgebildet ist, und wobei von mehreren Druckringen jeweils ein Druckring in einem Wellental zwischen zwei benachbarten Wellenbergen des Wellschlauchs über dem textilen Druckträger angeordnet ist, wobei auf dem textilen Druckträger abschnittsweise eine Imprägnierung bzw. Beschichtung aufgetragen ist.

### Detaillierte Beschreibung der bevorzugten Ausführungsbeispiele

Die Erfindung betrifft einen Ladeluftschlauch 1 für Kraftfahrzeuge, umfassend: einen schlauchförmigen Grundkörper 2, einen textilen Druckkörper 3, der auf der Oberfläche des Grundkörpers 2 angeordnet ist, wobei der schlauchförmige Grundkörper 2 ein vulkanisierter, elastomerhaltiger Schlauch ist. Der elastomerhaltige Schlauch 2 des erfindungsgemäßen Ladeluftschlauchs 1 ist als Elastomerschlauch ausgebildet und ist bereits vor dem Aufbringen des Textildruckträgers 3 vulkanisiert worden. Der elastomerhaltige Schlauch 2 weist zudem eine im Wesentlichen glatte Oberfläche auf. Je nach Ausführungsform wird der elastomerhaltige Schlauch 2 im Extrusionsverfahren oder Spritzgussverfahren hergestellt. In einer bevorzugten Ausführung der Erfindung ist der elastomerhaltige Schlauch 2 als Formschlauch, vorzugsweise als Wellschlauch, ausgebildet. Zur Herstellung des elastomerhaltigen Schlauchs 2 können alle elastomeren Werkstoffe, insbesondere auch thermoplastische Elastomere verwendet werden.

Als textiler Druckträger 3 wird ein Gestrick oder Geflecht bezeichnet, das erfindungsgemäß an bzw. auf der Oberfläche des schlauchförmigen Grundkörpers 2 angeordnet ist, um eine Volumenzunahme des Schlauchs 2 zu begrenzen. Vorzugsweise ist der textile Druckträger 2 aus Glasfilamenten hergestellt. Auch in den bevorzugten Ausführungsbeispielen der Erfindung, in welchen der elastomerhaltige Schlauch als Formschlauch bzw. Wellschlauch ausgebildet ist, umgibt der textile Druckträger 3 den Formschlauch 2 formgerecht. Dabei wird der textile Druckträger 3 als Geflecht ausgebildet, das z.B. nach dem Rundflechten, nach dem 3D-Flechten und/oder nach dem Umflechten eines endkonturnahen Kerns hergestellt ist. Vorzugsweise sind Druckringe 5, bevorzugt aus Kunststoff oder Metall, in den Wellentälern des Wellschlauchs 2 angeordnet, um den textilen Druckträger 3 in den Wellentälern möglichst eng an der Schlauchoberfläche zu halten.

Vorzugsweise ist der textile Druckträger 3 mit einem Beschichtungsmaterial 4 imprägniert und/oder beschichtet. Das Beschichtungsmaterial 4 ist vorzugsweise ein Harz oder ein Elastomer, bevorzugt ein Silikonelastomer. Alternativ oder zusätzlich kann das Garn des textilen Druckträgers 3 mit dem Beschichtungsmaterial 4 imprägniert sein. Das Beschichtungsmaterial 4 wird vorzugsweise durch Tauchen, Lackieren oder Umspritzen des Ladeluftschlauchs 1 oder des vorgefertigten textilen Druckträgers selbst, d.h. vor dem Aufbringen auf die Oberfläche des vulkanisierten, elastomerhaltigen Schlauchs 2, aufgetragen. Die Garnimprägnierung erfolgt vor der Fertigung des textilen Druckträgers 3. Nach Belieben ist das Beschichtungsmaterial 4 in der Farbe des Grundkörpers 2 und/oder Druckträgers 3 oder in einer gegenüber dem Grundkörper 2 und/oder Druckträger 3 unterschiedlichen Farbe eingefärbt, um den Ladeluftschlauch 1 über das Beschichtungsmaterial 4 einzufärben und/oder zu kennzeichnen.

Um die Schlauchenden im Hinblick an die Anbindung und Integration von Funktionen, z. B. Schellensitz, Schellenfixierung, Einbaumarkierungen, zu funktionalisieren, können die Schlauchenden umspritzt sein oder es können vorgefertigte Kappen; vorzugsweise Elastomerkappen, oder funktionalisierte, elastomere Schlauchabschnitte aufgeklebt und/oder aufvulkanisiert werden.

Die vorangehend genannten Merkmale der Erfindung können in beliebiger Weise kombiniert werden.

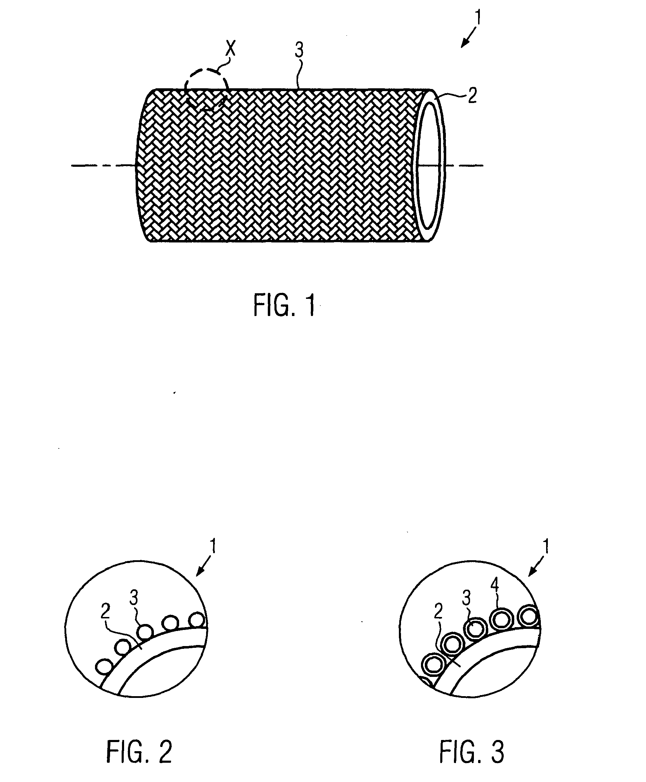

Ein erstes Ausführungsbeispiel der Erfindung wird nachstehend mit Bezug auf die Fig. 1 und 2 beschrieben.

Fig. 1 zeigt eine perspektivische Ansicht des erfindungsgemäßen Ladeluftschlauchs 1 gemäß einem ersten Ausführungsbeispiel der Erfindung. Der erfindungsgemäße Ladeluftschlauch 1 des ersten Ausführungsbeispiels umfasst einen vulkanisierten Elastomerschlauch 2 als Grundkörper und einen an bzw. auf der Schlauchoberfläche angeordneten textilen Druckträger 3. Der textile Druckträger 3 ist in Fig. 1 lediglich symbolisch dargestellt und ist vorzugsweise als Gestrick oder Geflecht aus Glasfilamenten ausgebildet.

Fig. 2 zeigt einen Querschnittsausschnitt des Ladeluftschlauchs 1 des ersten Ausführungsbeispiels aus Fig. 1. Wie in Fig. 2 zu erkennen ist, sind die Garne des textilen Druckträgers 3 an bzw. auf der Oberfläche des Elastomerschlauchs 2 angeordnet, ohne in das Material des Elastomerschlauchs einzudringen oder in den Elastomerschlauch 2 eingebettet zu sein.

Fig. 3 zeigt einen Querschnittsausschnitt einer Variante des ersten Ausführungsbeispiels in ähnlicher Ansicht wie Fig. 2, wobei die Garne des textilen Druckträgers 3 mit einer Imprägnierung 4 ausgerüstet sind.

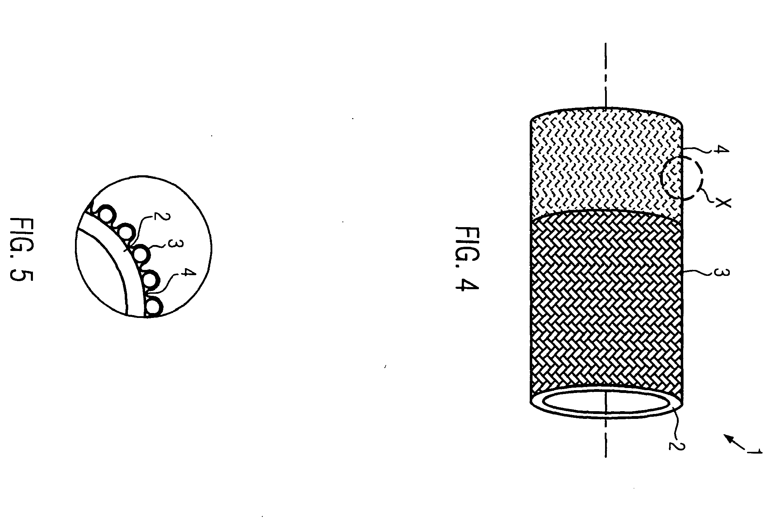

Fig. 4 zeigt einen erfindungsgemäßen Ladeluftschlauch 1 gemäß einem zweiten Ausführungsbeispiel der Erfindung in einer perspektivischen Ansicht. Der erfindungsgemäße Ladeluftschlauch 1 des zweiten Ausführungsbeispiels umfasst einen vulkanisierten Elastomerschlauch 2 als Grundkörper und einen an bzw. auf der Schlauchoberfläche angeordneten textilen Druckträger 3. Der textile Druckträger 3 ist lediglich symbolisch dargestellt und ist vorzugsweise als Gestrick oder Geflecht aus Glasfilamenten ausgebildet. Der textile Druckträger 3 ist mit einem Beschichtungsmaterial 4 imprägniert und/oder beschichtet. Das Beschichtungsmaterial 4 kann nach Belieben abschnittsweise oder vollständig über die Schlauchlänge und den Schlauchumfang aufgetragen sein.

Fig. 5 zeigt einen Querschnittsausschnitt des erfindungsgemäßen Ladeluftschlauchs 1 des zweiten Ausführungsbeispiels aus Fig. 4.

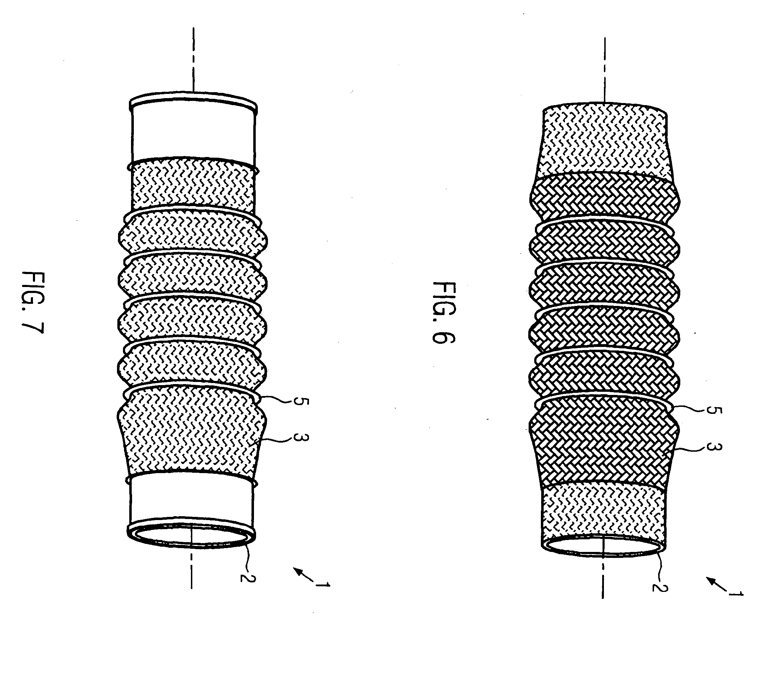

Fig. 6 zeigt den erfindungsgemäßen Ladeluftschlauch 1 gemäß einem dritten Ausführungsbeispiel der Erfindung. Der erfindungsgemäße Ladeluftschlauch 1 des dritten Ausführungs-beispiels umfasst einen als Wellschlauch ausgebildeten, vulkanisierten Elastomerschlauch 2 als Grundkörper und einen an der Schlauchoberfläche angeordneten textilen Druckträger 3.
Der textile Druckträger 3 ist lediglich symbolisch dargestellt und ist vorzugsweise als Gestrick oder Geflecht aus Glasfilamenten ausgebildet. Wie in Fig. 6 zu erkennen ist, folgt der textile Druckträger 3 der Kontur des Formschlauchs bzw. Wellschlauchs 2. In einigen Wellentälern ist - jeweils zwischen zwei benachbarten Wellenbergen - ein Druckring 5 über dem textilen Druckträger 3 angeordnet. Jeder Druckring 5 wird auf den Ladeluftschlauch 1 aufgeschoben und durch Zusammenknautschen des Elastomerschlauchs 2 in seine bestimmungsgemäße Position in einem Wellental zwischen zwei Wellenbergen des Wellschlauchs 2 gebracht. Jeder Druckring 5 hat die Funktion, den textilen Druckträger 3 möglichst eng an der Kontur des Wellschlauchs 2 zu halten und bei dynamischer Beanspruchung des Ladeluftschlauchs 1 ein Spannen des textilen Druckträgers 3 zur Überbrückung des Wellentals zu verhindern. Dadurch wird die Reibung des textilen Druckträgers 3 an der Schlauchoberfläche 2 verringert. Zusätzlich ist der textile Druckträger 3 an den Schlauchenden in ein stoffschlüssig mit dem Grundkörper 2 verbundenes Material eingebettet, wobei dieses Material vorzugsweise ein um die Schlauchenden umspritztes, elastomerhaltiges Material ist.

Fig. 7 zeigt den erfindungsgemäßen Ladeluftschlauch 1 gemäß einem vierten Ausführungsbeispiel der Erfindung. Der erfindungsgemäße Ladeluftschlauch 1 des vierten Ausführungsbeispiels umfasst einen als Wellschlauch ausgebildeten vulkanisierten Elastomerschlauch 2 als Grundkörper und einen an bzw. auf der Schlauchoberfläche angeordneten textilen Druckträger 3. Der textile Druckträger 3 ist lediglich symbolisch dargestellt und ist vorzugsweise als Gestrick oder Geflecht aus Glasfilamenten ausgebildet. Der erfindungsgemäße Ladeluftschlauch 1 des vierten Ausführungsbeispiels entspricht im Aufbau im Wesentlichen dem erfindungsgemäßen Ladeluftschlauch 1 des dritten Ausführungsbeispiels, wobei zusätzlich der flexible Druckträger 3 mit dem Beschichtungsmaterial 4 imprägniert und/oder beschichtet ist. Zusätzlich sind Schutzkappen an den Schlauchenden angeordnet, um ein Ablösen des textilen Druckträgers 3 vom Grundkörper 2 sowie eine Verkoppelung des Ladeluftschlauchs 1 zu ermöglichen. Alternativ oder zusätzlich ist das Garn des textilen Druckträgers 3 selbst mit einer Imprägnierung ausgerüstet. Dadurch wird die Garn/Garn-Reibung an den Kreuzpunkten des textilen Druckträgers 3 verringert.

Die Merkmale der genannten und beschriebenen Ausführungsbeispiele können in beliebiger Weise kombiniert werden.

Das erfindungsgemäße Verfahren zum Herstellen des Ladeluftschlauchs 1 für Kraftfahrzeuge umfasst die Schritte: Bereitstellen eines elastomerhaltigen Schlauchs 2 als schlauchförmigen Grundkörper, Vulkanisieren des elastomerhaltigen Schlauchs 2 und Aufbringen des textilen Druckträgers 3 auf die Oberfläche des vulkanisierten, elastomerhaltigen Schlauchs 2.

Um den erfindungsgemäßen Ladeluftschlauch 1 mit zusätzlichen vorteilhaften Eigenschaften zu versehen, kann der textile Druckträger 3 vor oder nach dem Aufbringen des textilen Druckträgers 3 auf die Oberfläche des vulkanisierten, elastomerhaltigen Schlauchs 2 mit dem Beschichtungsmaterial 4 imprägniert und/oder beschichtet werden. Alternativ oder zusätzlich kann das Garn des textilen Druckträgers 3 vor der Fertigung des textilen Druckträgers 3 mit einer Imprägnierung 4 ausgerüstet werden. Überdies kann der textile Druckträger 3 vor dem Aufbringen auf die Oberfläche des vulkanisierten, elastomerhaltigen Schlauchs 2 vorgefertigt oder beispielsweise in einem laufenden Verfahren auf der Oberfläche des vulkanisierten, elastomerhaltigen Schlauchs 2 erzeugt werden. Dazu eignet sich beispielsweise die gängige Umflechttechnologie.

## Patentansprüche

1. Ladeluftschlauch (1) für Kraftfahrzeuge, umfassend:
einen schlauchförmigen Grundkörper (2), und
einen textilen Druckträger (3), der an der Oberfläche des Grundkörpers (2) angeordnet ist,
wobei der schlauchförmige Grundkörper (2) ein vulkanisierter, elastomerhaltiger Schlauch ist.

2. Ladeluftschlauch (1) nach Anspruch 1, wobei zumindest ein Druckring (5) über dem textilen Druckträger (3) angeordnet ist.

3. Ladeluftschlauch (1) nach einem der vorangegangenen Ansprüche, wobei der elastomerhaltige Schlauch (2) als Elastomerschlauch ausgebildet ist.

4. Ladeluftschlauch (1) nach einem der vorangegangenen Ansprüche, wobei der elastomerhaltige Schlauch (2) eine im Wesentlichen glatte Oberfläche aufweist.

5. Ladeluftschlauch (1) nach einem der vorangegangenen Ansprüche, wobei der elastomerhaltige Schlauch (2) im Extrusionsverfahren oder Spritzgussverfahren hergestellt ist.

6. Ladeluftschlauch (1) nach einem der vorangegangenen Ansprüche, wobei der elastomerhaltige Schlauch (2) als Formschlauch, vorzugsweise als Wellschlauch, ausgebildet ist.

7. Ladeluftschlauch (1) nach einem der vorangegangenen Ansprüche, wobei der elastomerhaltige Schlauch (2) ein thermoplastisches Elastomer aufweist.

8. Ladeluftschlauch (1) nach einem der vorangegangenen Ansprüche, wobei der textile Druckträger (3) als Gestrick oder Geflecht ausgebildet ist.

9. Ladeluftschlauch (1) nach einem der vorangegangenen Ansprüche, wobei der textile Druckträger (3) aus Glasfilamenten hergestellt ist.

10. Ladeluftschlauch (1) nach einem der vorangegangenen Ansprüche, wobei der textile Druckträger (3) den Formschlauch (3) formgerecht umgibt.

11. Ladeluftschlauch (1) nach einem der vorangegangenen Ansprüche, wobei der textile Druckträger (3) als Geflecht ausgebildet ist, das vorzugsweise nach dem Rundflechten, nach dem 3D-Flechten und/oder nach dem Umflechten eines endkonturnahen Kerns hergestellt ist.

12. Ladeluftschlauch (1) nach einem der vorangegangenen Ansprüche, wobei der textile Druckträger (3) mit einem Beschichtungsmaterial (4) imprägniert und/oder beschichtet ist.

13. Ladeluftschlauch (1) nach einem der vorangegangenen Ansprüche, wobei das Garn des textilen Druckträgers (3) mit einer Imprägnierung (4) ausgerüstet ist.

14. Ladeluftschlauch (1) nach einem der vorangegangenen Ansprüche, wobei das Beschichtungsmaterial (4) ein Harz oder Elastomer, vorzugsweise Silikonelastomer, ist.

15. Ladeluftschlauch (1) nach einem der vorangegangenen Ansprüche, wobei das Beschichtungsmaterial (4) durch Tauchen, Lackieren oder Umspritzen des Ladeluftschlauches (1) aufgetragen ist.

16. Ladeluftschlauch (1) nach einem der vorangegangenen Ansprüche, wobei das Beschichtungsmaterial (4) in einer gegenüber dem Grundkörper (2) und/oder dem Druckträger (3) unterschiedlichen Farbe eingefärbt ist.

17. Ladeluftschlauch (1) nach einem der vorangegangenen Ansprüche, wobei der textile Druckträger (3) an zumindest einem Ende des Ladeluftschlauchs (1) in ein mit dem Grundkörper (2) stoffschlüssig verbundenes Material eingebettet ist.

18. Ladeluftschlauch (1) nach einem der vorangegangenen Ansprüche, wobei zumindest ein Ende des Ladeluftschlauchs.(1) umspritzt ist.

19. Ladeluftschlauch (1) nach einem der vorangegangenen Ansprüche, wobei an zumindest einem Ende des Ladeluftschlauchs (1) eine Kappe aufgeklebt und/oder aufvulkanisiert ist.

20. Verfahren zum Herstellen eines Ladeluftschlauches (1) für Kraftfahrzeuge, umfassend die Schritte:
Bereitstellen eines elastomerhaltigen Schlauchs (2) als schlauchförmigen Grundkörper,
Vulkanisieren des elastomerhaltigen Schlauchs (2), und
Aufbringen eines textilen Druckträgers (3) auf die Oberfläche des vulkanisierten, elastomerhaltigen Schlauchs (2).

21. Verfahren nach Anspruch 20, **gekennzeichnet durch** Imprägnieren und/oder Beschichten des textilen Druckträgers (3) mit einem Beschichtungsmaterial (4).

22. Verfahren nach Anspruch 20 oder 21, **gekennzeichnet durch** Ausrüsten des Garns des textilen Druckträgers (3) mit einer Imprägnierung (4).

23. Verfahren nach einem der Ansprüche 20 bis 22, **dadurch gekennzeichnet, dass** der textile Druckträger (3) durch Umstricken oder Umflechten des elastomerhaltigen Schlauchs (2) aufgetragen wird.
